# EUROPEAN PATENT SPECIFICATION

(11) **EP 2 555 873 B1**
(45) Date of publication and mention of the grant of the patent: **09.09.2020**
(21) Application number: 11720569.0
(22) Date of filing: 06.04.2011
(51) Int. Cl.: B01L 7/00, G01N 21/64

(54) **BIOCHEMICAL REACTIONS SYSTEM**
BIOCHEMISCHES REAKTIONSSYSTEM
SYSTÈME DE RÉACTIONS BIOCHIMIQUES

(30) Priority: 06.04.2010 GB 201005704
(43) Date of publication of application: 13.02.2013
(73) Proprietor: IT-IS International Limited, Middlesbrough TS9 5JY (GB)
(72) Inventor: WEBSTER, Benjamin, Masterman, Saltburn Cleveland TS12 1DP (GB); HOWELL, James, Richard, Middlesbrough TS15 0JP (GB)
(74) Representative: Hirsz, Christopher Stanislaw
(86) International application number: PCT/GB2011/050686
(87) International publication number: WO 2011/124918

(56) References cited:
- EP-A1- 0 953 379
- EP-A1- 0 953 379
- EP-A1- 1 681 555
- EP-A1- 1 681 555
- EP-A1- 1 688 734
- EP-A1- 1 688 734
- EP-A1- 2 127 751
- WO-A1-01/08800
- WO-A1-2005/113825
- WO-A1-2008/150066
- WO-A2-03/002991
- WO-A2-2004/024330
- WO-A2-2008/072156
- WO-A2-2010/079338
- WO-A2-2010/079338
- DE-A1-102006 036 171
- JP-A- S63 298 137
- JP-A- S63 298 137
- JP-A- 2005 166 829
- US-A1- 2002 110 492
- US-A1- 2002 121 094
- US-A1- 2004 065 655
- US-A1- 2006 086 118
- US-A1- 2006 127 946
- US-A1- 2006 166 226
- US-A1- 2007 096 564
- US-A1- 2008 274 511
- US-A1- 2010 081 191
- US-B1- 6 852 986
- US-B1- 6 852 986

## Description

The present invention relates to improvements in systems for chemical and/or biochemical reactions, such as, Polymerase Chain Reactions (PCR).

Many chemical and biochemical reactions are carried out which require highly accurately controlled temperature variations. Often, such reactions may need to go through several, or even many, cycles of varying temperature in order to produce the required effects. Furthermore, many such chemical and biochemical reactions are carried out which produce a detectable light signal, such as a fluorescent, chemiluminescent or bioluminescent signal, which occurs or is modified under certain reaction conditions. Such signals may emanate due to the reagents or results of the reaction(s) emitting light under certain conditions, for example due to excitation energy being applied, or may emanate by being generated by the reaction itself.

Detection of these light signals may be used in a variety of ways. In particular they can allow for the detection of the occurrence of a reaction, which may be indicative of the presence or absence of a particular reagent in a test sample, or to provide information about the progress or kinetics of a particular reaction. Although the term "light" is generally used to include visible light, it will be appreciated that optical signals that can emanate from reactions and be detected may also occur in the infra-red and/or ultra-violet portions of the spectrum and it is intended that the term "light" encompass all optical signals that can emanate from reactions of whatever wavelength that can be detected.

Of course, precise fluorescent measurements rely on precise excitation light sources. This, in turn, relies on the excitation light source or sources being carefully controlled, but also on the light coupling from the or each source to the reaction vessel being properly controlled to be uniform and controlled in intensity and wavelength. In known systems, such source control of the source(s) and coupling to the reaction vessel is missing.

A particular example of a reaction where a relatively large number of highly accurately controlled temperature varying cycles are required and where detectable signals and in particular fluorescent signals are monitored is in nucleic acid amplification techniques and in particular the polymerase chain reaction (PCR). Amplification of DNA by polymerase chain reaction (PCR) is a technique fundamental to molecular biology. PCR is a widely used and effective technique for detecting the presence of specific nucleic acids within a sample, even where the relative amounts of the target nucleic acid are low. Thus it is useful in a wide variety of fields, including diagnostics and detection as well as in research.

Nucleic acid analysis by PCR requires sample preparation, amplification, and product analysis. Although these steps are usually performed sequentially, amplification and analysis can occur simultaneously.

In the course of the PCR, a specific target nucleic acid is amplified by a series of reiterations of a cycle of steps in which nucleic acids present in the reaction mixture are denatured at relatively high temperatures, for example at 95□°C (denaturation), then the reaction mixture is cooled to a temperature at which short oligonucleotide primers bind to the single stranded target nucleic acid, for example at 55°C (annealing). Thereafter, the primers are extended using a polymerase enzyme, for example at 72°C (extension), so that the original nucleic acid sequence has been replicated. Repeated cycles of denaturation, annealing and extension result in the exponential increase in the amount of target nucleic acid present in the sample.

Variations of this thermal profile are possible, for example by cycling between denaturation and annealing temperatures only, or by modifying one or more of the temperatures from cycle to cycle.

Many such chemical or biochemical reactions take place in an apparatus having a number, sometimes a large number, of receptacles arranged in an array. In order not to affect the reaction, the receptacles are often formed from polypropylene as an array of wells in a plate. The wells are inserted into a metal block which is thermally controlled so that the wells are thermally controlled by thermal conductivity through the walls of the wells. Various ways of providing the required thermal control are known. One of the most common is by the use of thermoelectric modules, such as Peltier modules, that can be used to provide heating or cooling (depending on the direction of current flow through the module). Although Peltier modules are well known and will not be described in detail here, it should be noted that a Peltier module essentially consists of a pair of ceramic, thermally conductive plates, between which semiconductors are mounted successively, to form p-n- and n-p-junctions. Each junction has a thermal contact with thermally conductive plates. When switching on a current of one polarity, a temperature difference is formed between the thermally conductive plates: one of them heats up and operates as a heatsink, the other cools down and operates as a refrigerator.

However, Peltier modules provide a number of disadvantages when used for accurate, repetitive thermal cycling because they are not designed, in the first instance, for such thermal cycling. Firstly, because the Peltier module is itself thermally conductive, there is a loss of power through the device. Secondly, current reversal causes dopant migration across the semiconductor junction, which is not symmetrical, hence the junction effectively loses its function as a junction between different semiconductors over time.

Furthermore, repetitive temperature changes cause repetitive expansion and contraction cycles, which are not in themselves symmetric in a Peltier module. Since the Peltier module is in thermal contact with the thermal mount holding the wells and is itself often formed with different metals, which expand/contract at different rates, mechanical problems develop. These are mitigated by mechanically clamping the modules at high pressures, for example by using bolts that extend from the thermal mount having the wells, through the Peltier module and into the heat sink, but the mechanical problems still exist. Furthermore, the bolts themselves form a thermal path that can adversely affect the accurate control of the thermal cycling. This is also true of the wires that are used to electrically connect a power source to the Peltier module. Because the Peltier module requires quite high power during the ramping up and down of the temperature, a large power source is needed, and consequently large (thick) wires have been used to connect the power source to the Peltier module. These wires have also provided uncontrolled thermal paths to/from the Peltier module. Of course, the temperatures of the edges of the Peltier module are also far less controllable because of the fact that they are surrounded by uncontrolled ambient air, which may vary in its temperature and other characteristics. Finally, due to the nature of the operation of the Peltier module, hot and cold spots form on the surfaces thereof, which can be mitigated by attachment to a massive, thermally conductive heat sink, often made of aluminium, copper or silver, and/or to a massive thermally conductive mount, usually made of aluminium or copper, to average the heating, which again provide more mechanical problems.

US 2008/274511 discloses a device for carrying out chemical or biological reactions with a reaction vessel receiving element for receiving a microtiter plate with several reaction vessels, wherein the reaction vessel receiving element has several recesses arranged in a regular pattern to receive the respective reaction vessels, a heating device for heating the reaction vessel receiving element, and a cooling device for cooling the reaction vessel. The reaction vessel receiving element is divided into several segments. The individual segments are thermally decoupled from one another, and each segment is assigned a heating device which may be actuated independently of the others. By means of the segmentation of the reaction vessel receiving element, it is possible for zones to be set and held at different temperatures.

It is therefore an objective to provide improvements to chemical and/or biochemical systems to overcome, or at least reduce, some of the above problems. The reaction may be a Polymerase Chain Reaction or other types of chemical reactions such as, for example, Ligase Chain Reaction, Nucleic Acid Sequence Based Amplification, Rolling Circle Amplification, Strand Displacement Amplification, Helicase-Dependent Amplification, or Transcription Mediated Amplification.

The scope of the invention is limited by the appended claims. Any

Accordingly, in a first aspect, there is provided a chemical and/or biochemical system having at least one reaction vessel in which chemical and/or biochemical reactions may take place, a temperature of the reaction vessels being cycled between at least a highest predetermined temperature and a lowest predetermined temperature, the system comprising:
a thermal mount for receiving the at least one reaction vessel in a first surface thereof, the thermal mount having a second surface, opposed to the first surface;
a first layer of flexible adhesive having a first surface and a second surface opposed to the first surface, wherein the first surface of the first layer of flexible adhesive is in mechanical and thermal contact with the second surface of the thermal mount;
a thermoelectric module having a first, thermally conductive side in mechanical and thermal contact with the second surface of the first layer of flexible adhesive, and a second thermally conductive side opposed to the first thermally conductive side of the thermoelectric module, the thermoelectric module being provided with a pair of electrical contacts to which a pair of electrically conductive wires is connected for coupling to a power source;
a second layer of flexible adhesive having a first surface and a second surface opposed to the first surface, wherein the first surface of the second layer of flexible adhesive is in mechanical and thermal contact with the second thermally conductive side of the thermoelectric module, wherein the first and second layers of the flexible adhesive are applied in a controlled uniform thickness so as to have a substantially uniform thermal conductivity therethrough;
a heat sink in mechanical and thermal contact with the second surface of the second layer of the flexible adhesive,
wherein the first layer and the second layer of the flexible adhesive comprise a respective layer of silicone adhesive having thermally conductive material dispersed therein, both layers of the flexible adhesive being elastic to provide the "give" to allow the thermal mount, the thermoelectric layer and the heat sink to bend during thermal cycling without causing mechanical damage, the flexible adhesive being relatively thermally insulating compared to the first and second thermally conductive sides of the thermoelectric module, the flexible adhesive being thermally anisotropic whereby thermal energy preferentially spreads across the first and second thermally conductive sides of the thermoelectric module to thereby reduce hot and/or cold spots on the first and second thermally conductive sides of the thermoelectric module prior to the thermal energy being transferred through the first and second layers of the flexible adhesive, and
wherein the first and second layers of the flexible adhesive form the only thermal and mechanical coupling between the first thermally conducting side of the thermoelectric module and the second surface of the thermal mount and between the second thermally conducting side of the thermoelectric module and the heat sink.

Embodiments of a system incorporating various improvements will now be more fully described, by way of example, with reference to the drawings, of which:
FIG. 1 shows a schematic diagram of a PCR system according to one embodiment of the present invention, showing a number of improvements over the prior art;
FIG. 2 shows a schematic diagram of a PCR system showing other improvements over the prior art;
FIGs. 3 and 4 shows a schematic plan view of a thermoelectric module having other improvements over the prior art;
FIG. 5 shows a schematic plan view of a thermoelectric module having other improvements over the prior art;
FIG. 6 shows a schematic plan view of a thermoelectric module having other improvements over the prior art;
FIG. 7 shows a schematic diagram of a PCR system showing other improvements over the prior art;
FIG. 8 shows a schematic diagram of a PCR system showing other improvements over the prior art;
FIG. 9 shows a schematic diagram of a PCR system showing other improvements over the prior art;
FIG. 10 shows a schematic diagram of the main power components of a PCR system showing other improvements over the prior art; and
FIG. 11 shows time-domain parameters of the power control system of FIG.10.

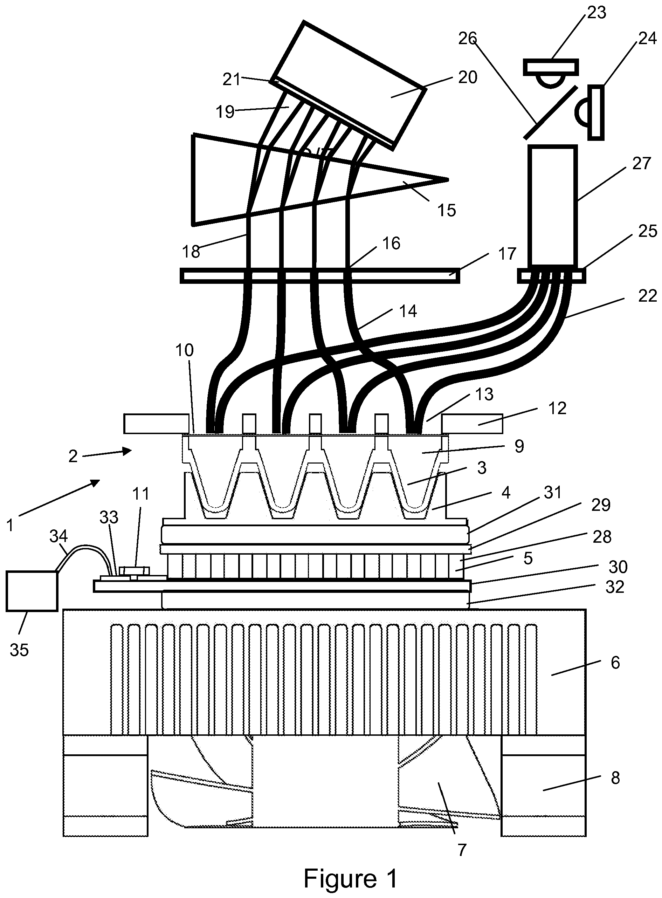

Thus, as shown in Figure 1 , a PCR system 1 includes an array 2 of vessels 3. The array 2 is positioned in a thermal mount 4 positioned on a thermoelectric heater/cooler 5, such as a Peltier module, of the well-known type. As is known, a

Peltier module can be used to heat or cool and the Peltier module is positioned on a heat sink 6 to provide storage of thermal energy, as required. The heat sink 6 is provided with a fan 7 mounted on a fan mounting 8 on the lower side of the heat sink 6 in order to facilitate heat dissipation, as necessary.

The thermal mount 4 is made of a material with good thermal conductivity, density and heat capacity, usually metal, such as aluminium or silver, although copper is also possible, and is provided with depressions, or wells, into which the vessels 3 fit so that the temperature in the vessels 3 can be controlled by controlling the temperature of the thermal mount 4. The vessels are conventionally made of polypropylene. Each vessel 3 of the array 2 is formed in the general shape of a cone and has an aperture 9 providing access to the vessel 3. The array 2 is covered by a relatively thin film 10, which is sealed to the edges of the aperture 9 of the vessels 3 to keep the reagents and reaction products within each vessel 3. Because substantial pressures may be produced during the course of the reactions in the vessels 3, the film 10 is clamped between the edges of aperture 9 of the vessels 3 and an upper clamping member 12, to reduce the chances that the film 10 separates from the edges of aperture 9 under higher pressures and allow the reagents and/or reaction/products to escape and/or to mix. In order to allow the interiors of the vessels to be examined during the course of the reactions taking place, the film 10 is made of a transparent or translucent material and the clamping member 12 is provided with apertures 13 in register with the apertures 9 of the vessels 3 to provide visual access to the interiors of each of the vessels 3. The clamping member 12 may be replaced by a heated lid (not shown) placed on it. The heated lid, which is usually arranged so as to provide pressure on the seal at the edges of the apertures of the reaction vessels, is heated to reduce condensation on the inside of the film 10 and is also usually transparent or provided with appropriate apertures to allow light from the reaction vessel to escape. These elements are not shown since they are well known.

As shown in Fig. 1, optical fibres 14 are provided with first ends adjacent the apertures 9 in the reaction vessels 3, so as to guide light emanating from the reaction vessels 3 towards a light dispersing element, such as a prism 15. The first ends of the optical fibres 14 may be mounted in a mounting plate (not shown) positioned over the clamping member 12 or heated lid, or they may be otherwise arranged adjacent the film 10 sealing the apertures 9 of the reaction vessels 3. The other ends of the fibres 14 are shown mounted in or at an aperture 16 provided in an array plate 17. It will be apparent that the optical fibres 14 guide the light from each of the reaction vessels and direct it in a predetermined array towards the prism 15. The light from the ends of the optical fibres 14 in the array plate 17 is directed along light path 18 to the prism 15 (or other light dispersing element, such as a diffraction grating), which disperses the light from each fibre 14 (and therefore from each reaction vessel 3) into a spectrum 19, as shown schematically in Fig. 1, into a detector 20. The spectra 19 are imaged onto an image plane 21 of the detector 20. In this way, spectra of the light emanating from the reaction vessels are provided at the detector 20.

The detector 20 may, in one embodiment, consist of a 1/2" (12mm) monochrome CMOS sensor, together with appropriate electronics and software allowing a "raw" frame to be captured giving the actual measured light levels for each pixel. This is used with a megapixel photographic lens assembly to form a camera which can focus light from a plane in space onto the sensor chip. It should be noted that "lens" is used herein interchangeably to mean either an "optical lens", a single piece of glass, or a "photographic lens"/"lens assembly" meaning one or more lenses used as a set to image onto a sensor plane such as the CMOS sensor. The camera is then used to image through a simple single glass lens and a 30° uncoated glass prism onto the fibre array.

Sensors providing for global shutter control giving substantially equivalent exposure intervals for each pixel are well suited for use with the system, since exposure of the entire image over the same time period means that each channel of each spectrum in that image is affected in the same way by any time varying conditions such as variable excitation intensity, etc. For each reaction vessel, each channel is also affected equally by any time varying conditions in the reaction vessel, such as condensation, temperature, physical movement such as bubble formation and movement etc.

Sensors that are well suited for use with the system include those providing for different subsets of pixels across the sensor array to be captured with different parameters, for example, electronic parameters such as analogue gain and offset, ADC reference voltage, pixel potential barrier, and other commonly controlled capture settings. Examples include sensors such as the Micron MT9T001, where pixels are grouped into 2x2 blocks, where the top left pixels of each block all belong to one subset, the top right pixels belong to another subset, and similarly for the bottom left and bottom right pixels. Each of these subsets of pixels can have a different ADC gain parameter. This can be used to effectively extend the dynamic range of the sensor; for example if a gain of 4x is used on even rows of the image, and a gain setting of 8x is used on odd rows, the spectral image will effectively be acquired as two half resolution images with different gain levels, where the lower gain image has a higher maximum light level at saturation, and the higher gain image provides greater precision at low light levels. Another example is the Aptina/Micron MT9V024 image sensor, where the image can be divided into an array of rectangular regions, and each rectangular region can have individual digital gain and gain control settings. The spectral image is particularly suitable for a sensor having different gain in different regions, since the regions can be arranged to coincide with the spectral images, giving different gain settings for different areas of the spectra, and hence for different wavelength regions. This can be used to acquire regions of the spectra that have different intensity levels so as to give the best SNR and least quantisation noise for each region.

Sensors providing a non-linear response in terms of output codes to light level are well suited for use with the system, particularly where the sensor response can be programmed, for example by means of multiple linear response regions and/or companding. An example of such a sensor is the Aptina/Micron MT9V024, which can use 12 bit to 10bit companding, and can also be given up to 3 regions if different linear response, resulting in a greater dynamic range. For example, such sensors can be configured so that they yield higher light to output gain at low light levels, giving good SNR and sensitivity at the light levels associated with early cycle PCR amplification where measurement precision is critical, but then yield lower gain at the higher light levels associated with mid and late cycle PCR in the plateau phase, where measurement precision is less critical. A final region of even lower gain at very high light levels associated with reflection of the excitation light can then be used to allow for measurement of the reflected light without the saturation that would result from a uniform higher gain level.

Optical fibres 22 are provided to bring excitation light to the reaction vessels 3 by having their first ends positioned adjacent one or more sources of excitation light 23, 24 and their other ends arranged adjacent the apertures to the reaction vessels 3. The excitation fibres 22 can be joined together at the excitation accepting end, to make it easier to direct light into them. This may be a drilled plate 25, but this is not necessary, since it is often easier just to bundle the fibres up into an approximately hexagonally packed bundle.

In this embodiment, one excitation light source may be a blue high intensity LED 23, having an aspherical lens thereon. The other excitation light source may be a green LED 24. The LEDs 23 and 24 are arranged on either side of a dichroic mirror 26 so as to combine the excitation light from both LEDs 23 and 24 and to direct it to a homogeniser 27 (essentially a hexagonal prism or cylinder of glass). The dichroic mirror 26 allows blue light from blue LED 23 to transmit, and reflects green light from green LED 24 into the homogenizer 27, which gives more uniform illumination of each excitation lightguide, by reflecting the excitation light multiple times within the homogenizer 27. This combination produces a spatially homogenous illumination of the polished end of the bundle of excitation fibres 22, so that each reaction vessel 3 receives fairly equal excitation. It should be noted that the dichroic mirror 26 could be replaced by some other means of directing light from both LEDs into the fibres, for example, a Y shaped lightguide, or even just by having the LEDs angled to both shine at an angle into the fibres.

One embodiment may have 16 pairs of emission/excitation fibres, mounted in cylindrical metal ferrules with one excitation and one emission per ferrule. The ferrules can then be placed in the holes of a conventional heated lid for use. The fibres may be made from heat resistant plastics to tolerate contact with the heated lid at ∼110C.

In order, then, to detect the spectra from the reaction vessels, the excitation source (blue or green) is turned on, left to settle for a short time, and an acquisition is then made of an image of the fibre ends. Various correction processes can be applied to this image; for example, correcting for any offset in the reading by subtracting a "dark" image from the acquired image. This dark image is taken with the sensor exposed to as little light as possible, to measure the constant offset that each pixel gives even without light (this is a standard optical correction technique). A further processing stage is to discard pixels of the image which are considered not to be providing a reliable measure of light; for example, so-called hot pixels which give a higher reading due to current leakage or other manufacturing flaws.

To correct for inevitable differences in the positioning of the optics and fibres, a calibration may be performed. This should be necessary only when the instrument has been first manufactured, or after it has been disturbed - due to physical shock, disassembly, etc. Calibration may just use an empty vessel array to reflect the excitation light back into each fibre. The relatively well defined image of the fibre ends in the image can then be seen, since the excitation light has a narrow waveband. The location of each bright point for the reaction vessels can then be found either manually or automatically, and this can be used as a fixed reference point in the spectrum for that reaction vessel. A rectangular (or other shaped) region for the spectrum of each vessel is then defined and stored together with the calibration.

Finally, to interpret a given image, a spectrum is extracted for each vessel. The spectral region for that vessel is looked up from the calibration, and spectral area is then simply scanned along from left to right, averaging the intensity of the pixels in each area to give an intensity for the spectrum itself in the waveband corresponding to those pixels. There are various means of converting, but a simple and adequate way is to average all the pixels in each vertical column of the spectral region, giving more weight to the brighter pixels in the center of the spectrum vertically. Each column average then becomes the intensity for that column, or channel of the reading. A final stage of correction would be to map the channels to the actual wavelength dispersed to that column of the image - this can be done by modelling the dispersing behaviour of the prism or measuring known spectra, but may not always be necessary, since it is possible to compare spectra by channels rather than by wavelength.

Although in the above description, the light emanating from the reaction vessels has been shown as being emitted from an area at the top of the reaction vessel, it will, of course, be apparent that the emitting area can be in any position. The fibres may be arranged adjacent any position of the reaction vessel which is light-transparent or from which the light emanates. Thus, for example, the thermal mount 4 may have holes drilled from the bottom of the wells 2. The reaction vessels 3 may then be formed so that the light-transparent areas of the reaction vessels 3 are at a lowermost point of the tapered reaction vessel. The excitation fibres may then be provided in a second aperture adjacent the bottom of each well 2.

In alternate configurations, the light receiving fibres and/or the excitation fibres may be arranged in holes in the thermal mount 4 which direct the ends of the fibres to a light-transparent area, which may be in the sides of the reaction vessels. It should be apparent that any appropriate configuration is possible, so long as the excitation light is emitted into the reaction vessels 3 and the light emanating from the reaction vessels 3 is collected and directed to the light sensing element. It will also be appreciated that the light dispersing element may not be needed, if the light sensing element is appropriately controlled to monitor and sense the light, depending on the nature of the detection that is required.

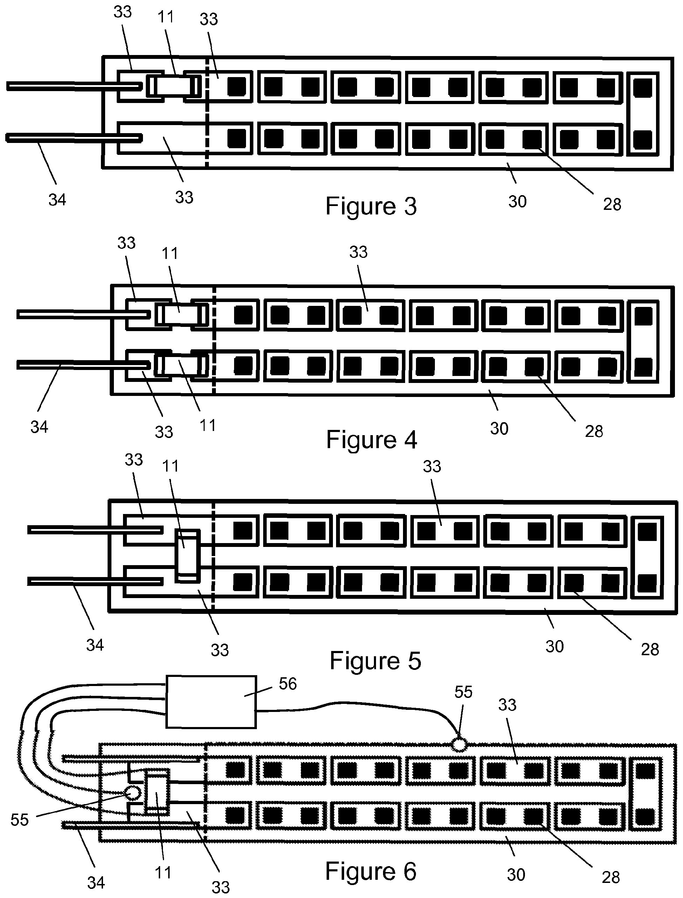

As mentioned earlier, the Peltier module 5 is provided with a plurality of semiconductor elements 28 coupled together alternately using electrical contacts 33, as best shown in Figures 3 to 5 to provide semiconductor junctions. The semiconductor elements 28 are mounted between a pair of thermally conductive plates 29, 30. Because Peltier modules are not designed for very accurate thermal cycling, which causes mechanical problems, as mentioned above, it is common to provide bolts through the upper clamping member 12 (or heated lid), the thermal mount 4, the Peltier module 5 and into the heat sink 6 so as to clamp the respective thermally conductive plates 29, 30 of the Peltier module 5 to the thermal mount 4 and the heat sink 6 under sufficient pressure to substantially prevent relative bending between them. However, the bolts themselves provide a heat sinking path so that accurate control of the system is reduced. In other known systems, a graphite mat may be positioned between the thermally conductive plates 29, 30 and the thermal mount 4 and the heat sink 6, so as to provide a compressive layer that can help to disperse any heat spots that may occur. In some cases, a thin layer of pressure sensitive adhesive may be used to hold the graphite mat in place, since otherwise, the Peltier module and the graphite mat may move transversely relative to each other. Alternatively, it is also known to use an epoxy resin to bond the respective thermally conductive plates 29, 30 of the Peltier module 5 to the thermal mount 4 and the heat sink 6. However, such a resin is rigid, when cured, and can itself be mechanically impaired by the thermal stresses and relative bending that occurs during the thermal cycling.

Thus, as shown in Figure 1, according to the present invention, the bolt clamping mechanism is not provided, and the thermally conductive plates 29, 30 of the Peltier module 5 are solely connected to the thermal mount 4 and the heat sink 6 by layers 31, 32 of flexible adhesive that is relatively thermally insulating, as compared to the thermally conductive plates 29, 30, such as a silicone adhesive having thermally conductive material dispersed therein. The adhesive should be elastic to provide the "give" that allows the various elements to bend during the thermal cycling, without causing mechanical damage, yet be relatively thermally insulating, thereby still allowing heat to transfer between the respective thermally conductive plates 29, 30 of the Peltier module 5 to the thermal mount 4 and the heat sink 6. The adhesive is provided in a controlled uniform thickness, so that it provides uniform thermal conductivity therethrough. However, because it is relatively thermally insulating, as compared to the thermally conductive plates 29, 30 of the Peltier module 5 and the thermal mount 4 and the heat sink 6, the thermal energy preferentially spreads across the thermally conductive plates in the X-Y plane to spread out and remove any hot spots, before being transferred across the adhesive in the Z direction. Suitable adhesives are those made by Arlon Silicone Technologies Limited under the trademark Thermabond ®.

At present the bonding layer that many practitioners use, between the thermoelectric module and the thermal mount is designed to be physically conformal and thermally conductive. To one skilled in the art it is obvious that such an interface material should be conformal, so as to maintain good thermal contact with adjacent components, and thermally conductive, so as to facilitate efficient transfer of heat between the adjacent components. However, in the present invention, it has been found that, that under certain conditions, the thermal performance, specifically, the uniformity of the thermal mount will benefit from a thermally anisotropic element located between thermoelectric module and the thermal mount and/pr the heat sink.

A number of factors can cause non-uniformity in the temperature of the thermoelectric module conductive plate adjacent to the thermal mount. These factors include: local differences in Peltier element efficiency, conductivity, and/or thermal contact with other elements of the system (heat-sink or wires). In order to reduce the level of non-homogeneity caused in the (typically isotropic) mount by these non-uniformities in thermoelectric module temperature it is desirable to provide a heat spreading layer between the thermoelectric module and the thermal mount and/or the heat sink. Such a heat-spreading element will function if it is anisotropic with respect to thermal conductivity. Compared to z axis, thermal conductivity x and/or y axis conductivity should be high. Thus, counter-intuitively, it improves system performance if the thermal interface is less thermally conductive in the z axis that may be possible, in order to provide the thermal interface with anisotropic properties.

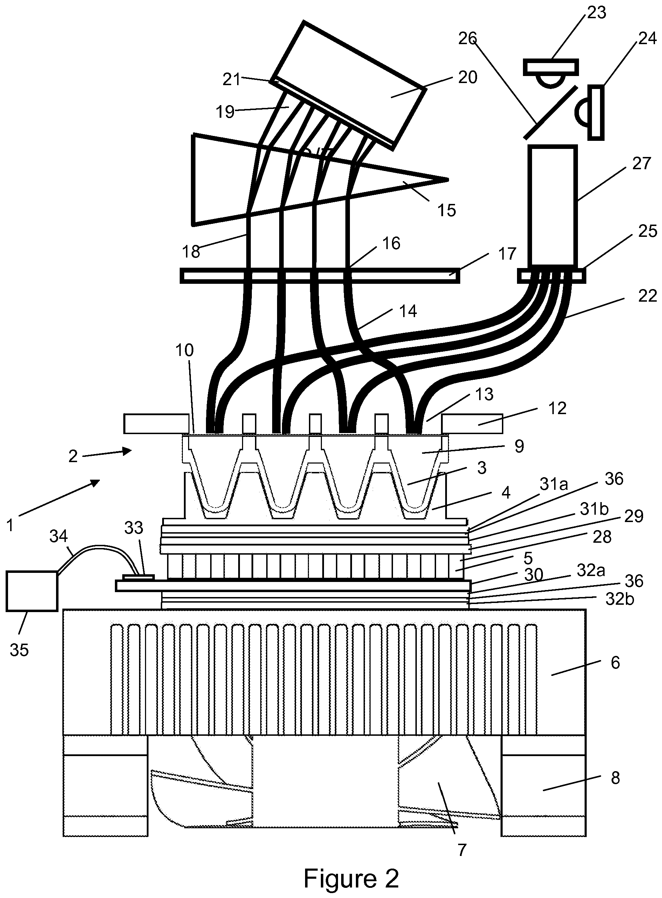

Turning to Figure 2, therefore, there is shown an alternative embodiment, where the flexible, relatively thermally insulating adhesive is provided in two or more layers 31a, 31b, 32a, 32b between the respective thermally conductive plates 29, 30 of the Peltier module 5 and the thermal mount 4 and the heat sink 6. In this case, one or more thin sheets 36 of thermally conductive material, such as a metal, is provided between the layers 31a, 31b, 32a, 32b of adhesive to form an adhesive laminate structure formed by alternating layers of the adhesive and conductive sheets, with the adhesive layers being the outer layers of the laminate to bond to the thermally conductive plates 29, 30 of the Peltier module 5 and to the thermal mount 4 and the heat sink 6. The thermally conductive sheets 36 are slightly more thermally conductive than the adhesive (similarly to the thermally conductive plates 29, 30), so that, again, the thermal energy preferentially spreads across the thermally conductive sheets 36 in the X-Y plane to spread out and remove any hot spots, before being transferred across the adhesive layers in the Z direction. Thus, what is provided is a thermally anisotropic element between the thermally conductive plates 29, 30 of the Peltier module 5 and the thermal mount 4 and the heat sink 6.

Figures 1 to 5 also show one or two edge electrical contacts 33 provided on an extension 61 of the thermally conductive plates 30 adjacent the heat sink 6. Electric wires 34 are connected from the edge electrical contacts 33 to a power supply 35 to provide power to the Peltier module 5. As mentioned above, the Peltier module requires quite high power during the ramping up and down of the temperature. Therefore, the power supply 35 has needed to be large and consequently large (thick) wires have been used to connect the power supply 35 to the Peltier module 5. These wires have also provided uncontrolled thermal paths to/from the Peltier module.

However, it has been found that the high power requirement of the Peltier module are only present during the ramping up and down of the temperature; whilst the temperature is being maintained constant, much lower power is required. Thus, a smaller power supply can be used, and thinner wires 34 can also be used. Thin wires 34, apart from reducing their thermal sinking, also have a more appreciable resistance than thick wires. Such resistance produces self-heating of the wires 34 when they pass current. By choosing wires with an appropriate resistance and self-heating level, the heat generated can be determined to be sufficient to reduce or even balance their heat sinking characteristics, so that the heat loss from the Peltier module is reduced or eliminated. It will be appreciated that a similar effect can be achieved by inserting an appropriate resistance in series between the contact pads 33 and the wires 34. Thus, Figures 3 and 4 show resistors 11 in series between one or both, respectively, electrical contacts 33 and the respective electrical wires 34.

Of course, the temperatures of the edges of the thermally conductive plates of the Peltier module are also far less controllable because of the fact that they are surrounded by uncontrolled ambient air, which may vary in its temperature and other characteristics. The plates are also non-symmetric when one has an extension 61 onto which the contact pads 33 are mounted. Accordingly, it is desirable, according to another improvement, to provide a resistance 11 in parallel across the contact pads 33 to provide localized heating to balance the heat loss down the electric wires, and/or from the edges of the thermally conductive plates, as shown in Figure 5. Instead of, or in addition, thereto heat sources may be positioned at appropriate locations around the edges of the Peltier module. In order to accurately control the thermal characteristics of the heaters and/or resistances, temperature sensors 55, as shown in Figure 6 can be provided to measure the temperature at or near the centre of the thermally conductive plates of the Peltier module 5 and at the edges thereof, and the heaters and/or resistances may be controlled by a controller 56 to balance the temperatures, as required. The electric wires may be made of a material that is thermally insulating, although electrically conductive, to reduce the heat sinking provided by the wires.

When the plates are non-symmetric when one has an extension 61 onto which the resistances are mounted, it is also desirable that the layer of adhesive, or anisotropic element, is not provided between the extension 61 of the thermoelectric module 5 and the heat sink 6. As can be seen in Figures 1 and 2, the thermal uniformity is improved by reducing the efficiency of heat sinking from the thermoelectric module 5 to the heat sink 6 at the end of the thermoelectric module 5 where wires 34 provide an alternative path for heat sinking to occur. In effect the non-bonding of the end of the thermoelectric module 5 to the heat sink 6 adjacent to the wires 34 is to mitigate the thermal non-uniformity caused by heat sinking from the thermoelectric module 5 to the wires 34.

A further improvement that can be made to achieve better thermal control of the system, is to replace the conventional heat sink 6 by a smaller, high efficiency heat sink (not shown). Such a heat sink has a plurality of thermally conductive rods extending downwardly from a thermally conducting block that is thermally coupled to the Peltier module. The use of the rods is more efficient and produces higher thermal sinking that the conventional heat sinks that have fins to sink the thermal energy.

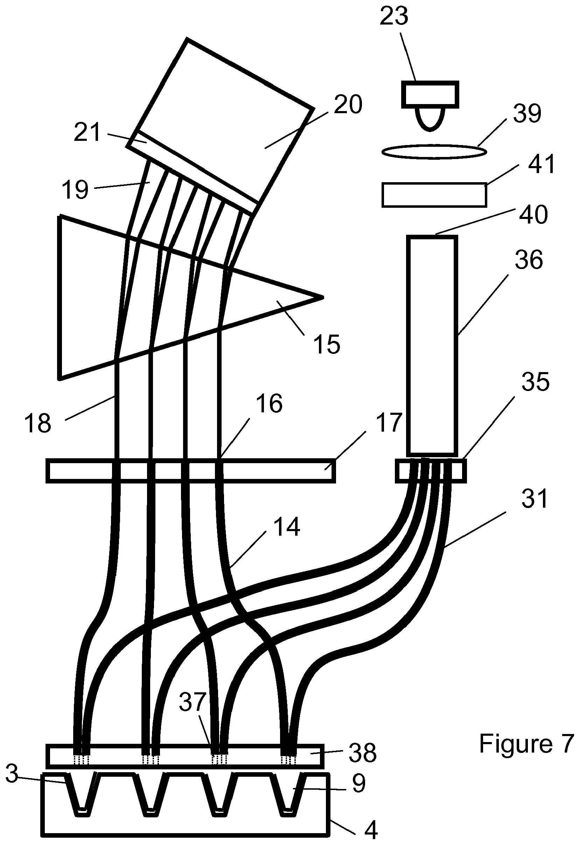

Turning now to Figure 7, there is shown schematically only the optical part of the system of Figures 1 and 2 with the thermal mount 4 having the reaction vessels 3 positioned therein. The fibres 14 and 22 are shown with their ends adjacent the apertures 9 of the vessels 3 mounted in apertures 37 in a plate 38 positioned over the apertures 9 of the reaction vessels 3. The seal and other elements are not shown in this drawing. In this case, only one LED 23 is shown, and, as can be seen, there is provided a lens 39 to collimate the light emitted from the LED 23 onto an input aperture 40 of the homogenizer 27 via a filter 41. The filter can be used to appropriately select the precise wavelength(s) of the light required for excitation if the LED does not itself accurately emit only the desired wavelength(s). It will be appreciated that the same configuration can be used for several LEDs, with one or more filters, perhaps with a separate filter associated with each LED. Where more than one LED is provided, they can be of the same colour, or of different colours, with the filters passing the same or different wavlengths. Other means of collimating the light may be used, instead of, or as well as, the lens 39. For example, one or more privacy filters could be used, and the input aperture of the homogenizer can itself be used as a collimating element.

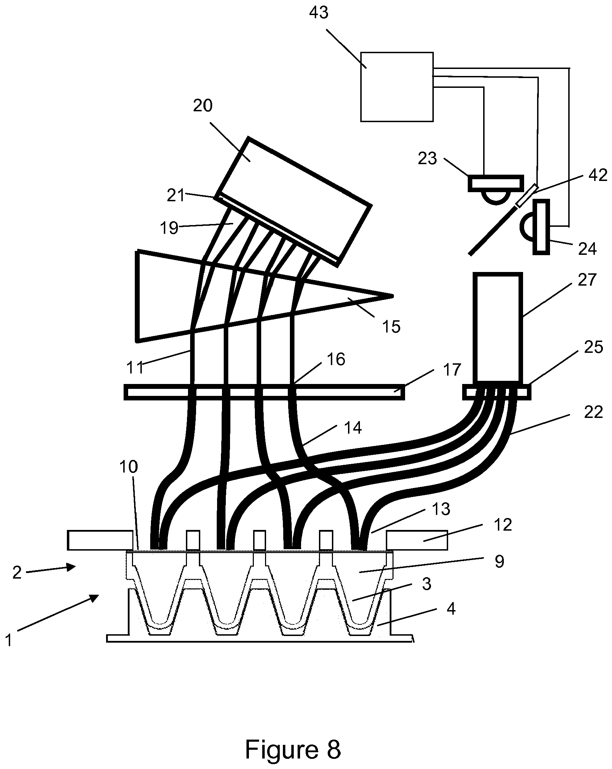

Figure 8 also shows schematically only the optical part of the system of Figures 1 and 2 with the thermal mount 4 having the reaction vessels 3 positioned therein. The fibres 14 and 22 are shown, as in Figures 1 and 2, with their ends positioned in the apertures 13 in the clamping plate 12 adjacent the seal 10 over the apertures 9 of the vessels 3. In this case, both LEDs 23, 24 are shown, together with the dichroic mirror 26. However, a light sensor 42 is arranged to measure the light intensity emitted by each of the LEDs 23, 24. It will be appreciated that more than one light sensor may be used, for example, one per LED. The sensor(s) is connected to a controller 43, which is connected to each of the LEDs 23, 24 to control them. Thus, the LEDs are switched on and off to provide accurately controlled excitation light to the reaction vessels 3. When a predetermined amount of light from an LED has been sensed, the controller switches off that LED, so that only a predetermined amount of excitation light is provided to the reaction vessels for each cycle. Of course, the controller could control an aperture or other "gate" to make control the amount of light that is coupled from the LED into the fibres 22. Thus "gated" excitation may be synchronized with the integration period of the sensor. The result is reduced noise and improved signal to noise.

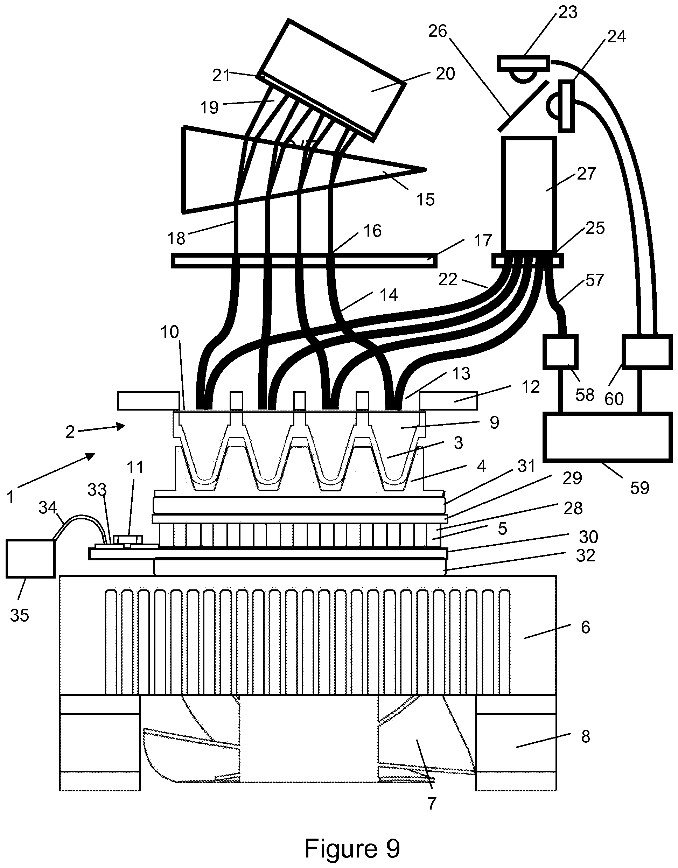

An alternate method for measure the light intensity emitted by the LEDs 23, 24 is shown in Figure 9, where a further optical fibre 57 is mounted in the plate 25 so as to receive light from the output face of the homogenizer 27. The fibre 57 couples the light from the homogenizer 57 to a light sensor 58. The light sensor 58 is coupled to an exposure controller 59 that monitors the light levels and is coupled to an LED controller 60 to turn off one or both/all of the LEDs 23, 24. Thus, the system operates with the following stages:
- Switch on LED
- Monitor light level to give a continuous estimate of the total light that has been emitted (estimated because only a representative portion of the emitted light is being monitored)
- Switch off LED when estimated total light reaches a desired value,
- Repeat if necessary.

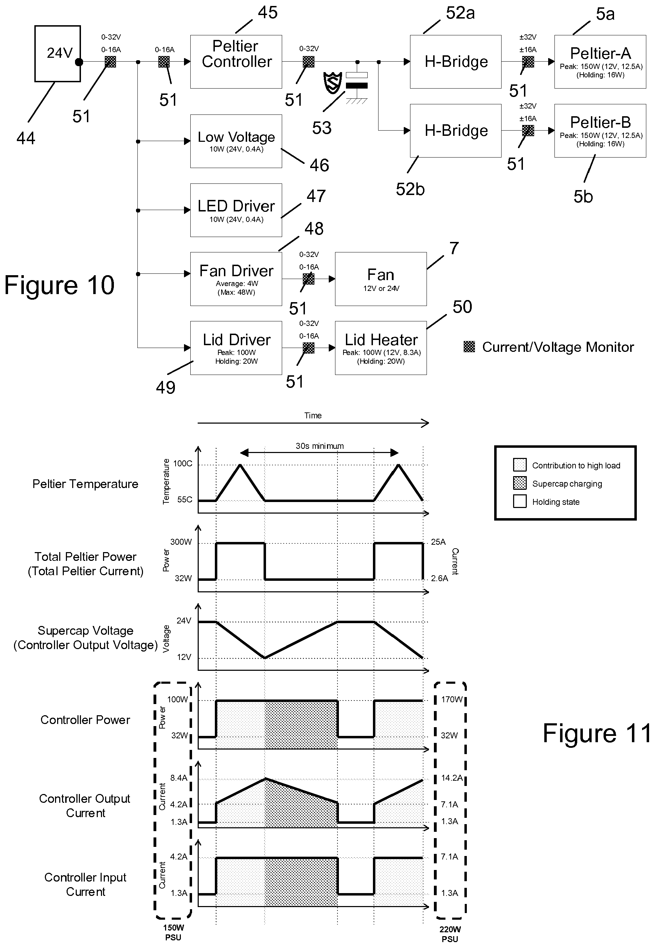

Figure 10 shows schematically the main electrical components of the system. As shown, there is a 24 Volt main power supply 44 which supplies power to a Peltier controller 45, a low voltage power supply 46 for supplying low voltage power to, for example the various electronic processing devices, an LED driver 47 for supplying power to the LEDs, a fan driver 48 for supplying power to the fan 7, and a lid driver 49 for supplying power to a heater 50 for the heated lid. The normal power requirements of these elements is indicated in the drawing. As can be seen, there are a variety of loads, some of which draw lots of current, and there is the potential for the power requirement to exceed the power availability. In this case, the system, as shown, includes two Peltier modules 5a, 5b (Peltier-A and Peltier-B).

Power originates from an external 24V main power supply 44. It is assumed that the power supply can deliver a maximum of 150W (6.25A). However, it may be upgraded to a 220W (9.16A) device, if required. Current and voltage (and hence power) are monitored at a number of points around the system, as shown by monitors 51. Each monitor 51 is formed by a dual-channel 12-bit ADC which provides control-rate information to a field-programmable gate array (FPGA), which in turn drives power control Field Effect Transistors (FETs).

There are three low-power sections within the instrument: the fan driver 48, the LED driver 47, and the low-voltage power supply 46. These consume a relatively low and constant power of no more than a total of 30W. The heated lid driver 49 can draw a relatively high current, but is only operated at full power when the Peltier modules 5a, 5b are in a low-power "holding" mode. In this state, the external power supply can fulfill the power requirement of the lid heater 50. At other times, the lid heater 50 is placed in a low-power holding mode that draws only 20W.

The main high-power devices within the system are the two Peltier modules 5a, 5b, each driven from an independent buck-regulator H-bridge 52a, 52b. Taking the above figures into account, a 150W power supply can spare a maximum of 100W for driving the high-power devices, and a 220W supply can spare a maximum of 170W for driving these devices.

The Peltier modules 5a, 5b are each rated at 150W at 12V, with a corresponding peak current draw of 12.5A. Accordingly, when driving both Peltier modules 5a, 5b, there is a power requirement of 300W with a current draw of 25A. The peak power requirement of the Peltier modules 5a, 5b thus significantly exceeds the spare power supply capacity. In order to drive the Peltier modules 5a, 5b at rates beyond the means of the external power supply, a bank of supercapacitors 53 is provided so as to provide high currents for relatively short amounts of time. Both the Peltier modules 5a, 5b and the supercapacitors 53 are isolated from the main power supply 44 by means of the Peltier controller 45, which may be a current-limiting buck regulator.

Figure 11 shows how the critical parameters of the power control system vary over a high-power heating cycle. In the quiescent (holding) state, the supercapacitors 53 are charged to 24V from the main power supply 44 through the Peltier controller 45. During a heating cycle, the 300W of power required by the Peltier modules 5a, 5b is derived from a combination of the supercapacitors 53 and the main power supply 44. Assuming the use of a 150W power supply, a contribution is made of 100W. This is regulated by the FPGA of the monitor 51 connected to the input of the Peltier controller 45 ensuring that no more than 100W/24V=4.2A flows into the Peltier controller 45. Upon leaving the quiescent (holding) state, both the Peltier controller output voltage and the supercapacitors 53 are at 24V. Each H-Bridge 52a, 52b draws 6.25A. As current is drawn, the supercapacitors 53 will discharge, and in any other circumstances more current would be drawn from the main power supply 44 in order to keep them topped-up. However, the Peltier controller 45 is already at current limit, and so it reduces the output voltage and accordingly no effort is made to recharge the supercapacitors 53. In effect, the Peltier controller 45 output voltage tracks the voltage of the supercapacitors 53 as they discharge.

The Peltier controller 45 is a switch-mode buck regulator, and as the output voltage is lowered, its ability to provide output current increases. Ignoring any losses, the overall power (*i.e.* product of output voltage and output current) remains constant. Thus the main power supply 44 contribution is kept stable. The end of the run is designed to coincide with the supercapacitors 53 being discharged to approximately 12V. As the output voltage of the Peltier controller 45 tracks the voltage down to 12V, its output current steadily increases to 8.4A. It should be noted that the supply to the H-Bridges 52a, 52b varies from 24V down to 12V. This is not a problem since the H-Bridges 52a, 52b are themselves adaptive and convert any incoming voltage down to the 12V required for the Peltier modules 5a, 5b.

Upon re-entering the quiescent (holding) state, the current drawn by the Peltier modules 5a, 5b drops dramatically, and current starts to flow from the Peltier controller 45 back into the supercapacitors 53. These recharge at a rate limited by the 100W (24V @ 4.2A) contribution of the main power supply 44. As the supercapacitors 53 charge, the Peltier controller 45 output voltage tracks in tandem, until the steady 24V charged level is attained. At this point, the system is ready for another heating cycle.

Thus, it can be seen that the power controller is capable of supplying current in one direction to cause the thermoelectric module to transfer heat in one direction, and supplying current in the opposite direction to cause the thermoelectric module to transfer heat in the opposite direction, and where the controller can use the capacitor as a source of current, discharging it, or as a sink for current, charging the capacitor, and where the controller can use the power supply as a source of current. The operation of this controller can be such that during a quiescent stage of the thermal cycle, when the thermoelectric module is drawing relatively low power, controller uses a portion of the current from the power supply to drive the thermoelectric module, and the remainder of the available current from the power supply to charge the capacitor, and during a temperature changing stage of the thermal cycle, when the thermoelectric module is drawing relatively high power, controller uses current from both the power supply and the capacitor to drive the thermolecetric module, discharging the capacitor. The controller can provide a means of ensuring that current is never returned to the power supply, and that the current from and to each component is within specifications.

All current monitoring operates on a 0-16A scale, so 16A is the absolute maximum measurement limit. However, the largest current expected in operation is 12.5A.

At large currents, small-value current sense resistors have the potential to dissipate significant amounts of power. Accordingly, current sense resistors are chosen to be as low as feasibly possible - 5 milliohms, for example. In practice, a resistor rated for 1W continuous power may be used. Although the power dissipation at the measurement limit is greater than this, the situation should never actually be encountered in use (apart possibly from transient events). 12-bit ADCs are utilised in the current monitors, so a theoretical resolution of just under 4mA is possible.

The exception to this is in the case of the Peltier current monitoring, which is bipolar. Here the resolution halves to approximately 8mA.

It will be appreciated that although only some particular embodiments of the invention have been described in detail, various modifications and improvements can be made by a person skilled in the art without departing from the scope of the present invention. For example, it will be apparent that the expression "thermal sensor" as used herein is intended to cover any combination of components that may be used to measure temperature and can include more than one sensor with the outputs of the sensors being processed in some way to provide an appropriate temperature reading. Similarly, a "light sensor" as used herein is intended to cover any combination of components that may be used to measure light and can include more than one sensor with the outputs of the sensors being processed in some way to provide an appropriate light reading.

## Claims

1. A chemical and/or biochemical system (1) having at least one reaction vessel (3) in which chemical and/or biochemical reactions may take place, a temperature of the reaction vessels (3) being cycled between at least a highest predetermined temperature and a lowest predetermined temperature, the system (1) comprising:
a thermal mount (4) for receiving the at least one reaction vessel (3) in a first surface thereof, the thermal mount (4) having a second surface, opposed to the first surface;
a first layer (31) of flexible adhesive having a first surface and a second surface opposed to the first surface, wherein the first surface of the first layer (31) of flexible adhesive is in mechanical and thermal contact with the second surface of the thermal mount (4);
a thermoelectric module (5) having a first, thermally conductive side (29) in mechanical and thermal contact with the second surface of the first layer (31) of flexible adhesive, and a second thermally conductive side (30) opposed to the first thermally conductive side of the thermoelectric module (5), the thermoelectric module (5) being provided with a pair of electrical contacts (33) to which a pair of electrically conductive wires (34) is connected for coupling to a power source (35);
a second layer (32) of flexible adhesive having a first surface and a second surface opposed to the first surface, wherein the first surface of the second layer (32) of flexible adhesive is in mechanical and thermal contact with the second thermally conductive side (30) of the thermoelectric module (5), wherein the first (31) and second (32) layers of the flexible adhesive are applied in a controlled uniform thickness so as to have a substantially uniform thermal conductivity therethrough;
a heat sink (6) in mechanical and thermal contact with the second surface of the second layer (32) of the flexible adhesive,
wherein the first layer (31) and the second layer (32) of the flexible adhesive comprise a respective layer of silicone adhesive having thermally conductive material dispersed therein, both layers of the flexible adhesive being elastic to provide the "give" to allow the thermal mount, the thermoelectric layer and the heat sink to bend during thermal cycling without causing mechanical damage, the flexible adhesive being relatively thermally insulating compared to the first (29) and second (30) thermally conductive sides of the thermoelectric module (5), the flexible adhesive being thermally anisotropic whereby thermal energy preferentially spreads across the first (29) and second (30) thermally conductive sides of the thermoelectric module (5) to thereby reduce hot and/or cold spots on the first (29) and second (30) thermally conductive sides of the thermoelectric module (5) prior to the thermal energy being transferred through the first (31) and second (32) layers of the flexible adhesive, and
wherein the first (31) and second (32) layers of the flexible adhesive form the only thermal and mechanical coupling between the first thermally conducting side (29) of the thermoelectric module (5) and the second surface of the thermal mount (4) and between the second thermally conducting side (30) of the thermoelectric module (5) and the heat sink (6).

2. A system according to claim 1, comprising a thermally anisotropic element between the first thermally conductive side of the thermoelectric module and the second surface of the thermal mount and between the second thermally conductive side of the thermoelectric module and the heat sink.

3. A system according to any preceding claim, wherein the electrically conductive wires are thin so as to have an electrical resistance that produces heat during operation of the thermoelectric module, the heat being used to counteract heat energy that is conducted by the wires from the thermoelectric module.

4. A system according to any preceding claim, wherein at least one resistor is coupled in series between one of the electrical contacts and the electrical conductive wire connected thereto to produce heat during operation of the thermoelectric module, wherein the heat produced by the resistor is used to counteract the heat energy that is conducted by the wires from the thermoelectric module.

5. A system according to any preceding claim, further comprising a power controller coupled between the electrically conductive wires and a power source and at least one capacitor coupled to the power controller, wherein the power controller is capable of supplying current in one direction to cause the thermoelectric module to transfer heat in one direction, and supplying current in the opposite direction to cause the thermoelectric module to transfer heat in the opposite direction, and where the power controller uses the capacitor as a source of current by discharging it, or as a sink for current by charging the capacitor, and wherein the power controller can use the power source as a supply of current.

6. A system according to any preceding claim, further comprising at least one capacitor coupled to the thermoelectric module and a controller coupled between the capacitor and the power supply for controlling the power supplied from the power supply, wherein, during a quiescent stage of the thermal cycle, when the thermoelectric module is drawing relatively low power, the capacitor is charged from the power source, and during a temperature changing stage of the thermal cycle, when the thermoelectric module drawing relatively high power, the capacitor discharges to provide at least part of the power requirement to the thermoelectric module.

7. A system according to either claim 5 or claim 6, wherein the at least one capacitor forms part of a bank of capacitors coupled to the thermoelectric module.

8. A system according to any preceding claim, further comprising at least one source of excitation light, at least one filter for filtering the excitation light from the excitation light source, a homogenizer for homogenizing the filtered excitation light and a plurality of optical fibres arranged with first ends adjacent the homogenizer for receiving the homogenized filtered excitation light and respective second ends adjacent respective reaction vessels for directing the excitation light into the respective reaction vessels.

9. A system according to claim 8, wherein the homogenizer comprises a hexagonal prism or cylinder of light transmitting material for reflecting the excitation light multiple times within the homogenizer so as to provide more uniform illumination of each optical fiber.

10. A system according to either claim 8 or claim 9, further comprising at least one second excitation light source providing excitation light of a different waveband than that of the first excitation light source.

11. A system according to claim 10, wherein the filter is a dichroic mirror, optionally having a filter adjacent each light source for filtering the excitation light from that light source, and optionally further comprising a collimating element between the excitation light source(s) and the filter(s) for collimating the excitation light incident on the filter(s).

12. A system according to any preceding claim, further comprising at least one source of excitation light, at least one sensor for detecting the excitation light from the excitation light source, a light source controller coupled to the sensor and the excitation light source for controlling the excitation light source depending on the amount of light sensed by the sensor to turn off the excitation light source when a predetermined amount of light has been sensed.

13. A system according to claim 12, wherein the sensor is arranged to receive the excitation light from an optical fibre having a first end arranged adjacent the output end of the homogenizer and a second end adjacent the sensor.

14. A system according to either claim 12 or claim 13, wherein the light source controller controls the excitation light source so that it is synchronized with an integration time of the sensor.

15. A system according to any preceding claim, wherein the or each reaction vessel comprises a receptacle portion having an emitting area from which light can emanate, the system comprising at least one optical fibre for the or each reaction vessel being arranged to guide light from the emitting area to a light detecting device for detecting one or more wavelengths of light in the light emanating from the emitting area.

16. A system according to claim 15, wherein the light detecting device comprises one or more wavelength specific filters for selecting particular wavelengths or wavebands in the spectrum of light received from the optical fibre(s).

17. A system according to any preceding claim, wherein the at least one reaction vessel is configured to permit a Polymerase Chain Reaction to take place within it.

## Patentansprüche

1. Chemisches und/oder biochemisches System (1) mit wenigstens einem Reaktionsgefäß (3), in dem chemische und/oder biochemische Reaktionen stattfinden können, wobei eine Temperatur der Reaktionsgefäße (3) zwischen wenigstens einer höchsten vorbestimmten Temperatur und einer tiefsten vorbestimmten Temperatur gewechselt wird, wobei das System (1) Folgendes umfasst:
eine thermische Halterung (4) zur Aufnahme des wenigstens einen Reaktionsgefäßes (3) in einer ersten Oberfläche davon, wobei die thermische Halterung (4) eine zweite Oberfläche hat, die der ersten Oberfläche gegenüberliegt;
eine erste Schicht (31) aus flexiblem Klebstoff mit einer ersten Oberfläche und einer zweiten Oberfläche, die der ersten Oberfläche gegenüberliegt, wobei die erste Oberfläche der ersten Schicht (31) aus flexiblem Klebstoff in mechanischem und thermischem Kontakt mit der zweiten Oberfläche der thermischen Halterung (4) ist;
ein thermoelektrisches Modul (5) mit einer ersten wärmeleitfähigen Seite (29), die in mechanischem und thermischem Kontakt mit der zweiten Oberfläche der ersten Schicht (31) aus flexiblem Klebstoff ist, und einer zweiten wärmeleitfähigen Seite (30) gegenüber der ersten wärmeleitfähigen Seite des thermoelektrischen Moduls (5), wobei das thermoelektrische Modul (5) mit einem Paar elektrischen Kontakte (33) versehen ist, mit denen ein Paar elektrisch leitfähige Drähte (34) zum Koppeln an eine Energiequelle (35) verbunden ist;
eine zweite Schicht (32) aus flexiblem Klebstoff mit einer ersten Oberfläche und einer zweiten Oberfläche gegenüber der ersten Oberfläche, wobei die erste Oberfläche der zweiten Schicht (32) aus flexiblem Klebstoff in mechanischem und thermischem Kontakt mit der zweiten wärmeleitfähigen Seite (30) des thermoelektrischen Moduls (5) ist, wobei die erste (31) und die zweite (32) Schicht aus flexiblem Klebstoff in einer kontrollierten gleichmäßigen Dicke aufgetragen sind, so dass sie eine im Wesentlichen gleichmäßige Wärmeleitfähigkeit dadurch aufweisen;
einen Kühlkörper (6) in mechanischem und thermischem Kontakt mit der zweiten Oberfläche der zweiten Schicht (32) aus dem flexiblen Klebstoff,
wobei die erste Schicht (31) und die zweite Schicht (32) aus dem flexiblen Klebstoff jeweils eine Schicht aus Silikonklebstoff mit darin dispergiertem wärmeleitfähigem Material umfassen, wobei beide Schichten aus dem flexiblen Klebstoff elastisch sind, um eine "Nachgiebigkeit" zu erzielen, damit sich die thermische Halterung, die thermoelektrische Schicht und der Kühlkörper während der thermischen Wechselbeanspruchung biegen können, ohne mechanische Schäden zu verursachen, wobei der flexible Klebstoff im Vergleich zur ersten (29) und zweiten (30) wärmeleitfähigen Seite des thermoelektrischen Moduls (5) relativ wärmeisolierend ist, wobei der flexible Klebstoff thermisch anisotrop ist, wodurch sich thermische Energie bevorzugt über die erste (29) und zweite (30) wärmeleitfähige Seite des thermoelektrischen Moduls (5) ausbreitet, um dadurch heiße und/oder kalte Stellen auf der ersten (29) und zweiten (30) wärmeleitfähigen Seite des thermoelektrischen Moduls (5) zu reduzieren, bevor die thermische Energie durch die erste (31) und zweite (32) Schicht aus flexiblem Klebstoff übertragen wird, und
wobei die erste (31) und zweite (32) Schicht aus dem flexiblen Klebstoff die einzige thermische und mechanische Kopplung zwischen der ersten wärmeleitfähigen Seite (29) des thermoelektrischen Moduls (5) und der zweiten Oberfläche der thermischen Halterung (4) und zwischen der zweiten wärmeleitfähigen Seite (30) des thermoelektrischen Moduls (5) und dem Kühlkörper (6) bilden.

2. System nach Anspruch 1, das ein thermisch anisotropes Element zwischen der ersten wärmeleitfähigen Seite des thermoelektrischen Moduls und der zweiten Oberfläche der thermischen Halterung und zwischen der zweiten wärmeleitfähigen Seite des thermoelektrischen Moduls und dem Kühlkörper umfasst.

3. System nach einem vorherigen Anspruch, wobei die elektrisch leitfähigen Drähte dünn sind, so dass sie einen elektrischen Widerstand haben, der während des Betriebs des thermoelektrischen Moduls Wärme erzeugt, wobei die Wärme verwendet wird, um Wärmeenergie entgegenzuwirken, die durch die Drähte von dem thermoelektrischen Modul geleitet wird.

4. System nach einem vorherigen Anspruch, wobei wenigstens ein Widerstand zwischen einem der elektrischen Kontakte und dem damit verbundenen elektrisch leitfähigen Draht in Reihe gekoppelt ist, um während des Betriebs des thermoelektrischen Moduls Wärme zu erzeugen, wobei die von dem Widerstand erzeugte Wärme verwendet wird, um der Wärmeenergie entgegenzuwirken, die durch die Drähte von dem thermoelektrischen Modul geleitet wird.

5. System nach einem vorherigen Anspruch, das ferner einen Leistungsregler, der zwischen den elektrisch leitfähigen Drähten und einer Energiequelle gekoppelt ist, und wenigstens einen Kondensator umfasst, der mit dem Leistungsregler gekoppelt ist, wobei der Leistungsregler in der Lage ist, Strom in einer Richtung zuzuführen, um zu bewirken, dass das thermoelektrische Modul Wärme in einer Richtung überträgt, und Strom in der entgegengesetzten Richtung zuzuführen, um zu bewirken, dass das thermoelektrische Modul Wärme in der entgegengesetzten Richtung überträgt, und wobei der Leistungsregler den Kondensator als eine Stromquelle nutzt, indem er ihn entlädt, oder als eine Stromsenke nutzt, indem er den Kondensator auflädt, und wobei der Leistungsregler die Energiequelle als Stromversorgung nutzen kann.

6. System nach einem vorherigen Anspruch, das ferner wenigstens einen Kondensator, der mit dem thermoelektrischen Modul gekoppelt ist, und einen Regler umfasst, der zwischen dem Kondensator und der Energieversorgung gekoppelt ist, um die von der Energieversorgung zugeführte Energie zu regeln, wobei während einer Ruhephase des thermischen Zyklus, wenn das thermoelektrische Modul relativ wenig Energie zieht, der Kondensator von der Energiequelle aufgeladen wird, und während einer Temperaturänderungsphase des thermischen Zyklus, wenn das thermoelektrische Modul relativ viel Energie zieht, der Kondensator entlädt, um wenigstens einen Teil des Energiebedarfs dem thermoelektrischen Modul zuzuführen.

7. System nach Anspruch 5 oder 6, wobei der wenigstens eine Kondensator Teil einer mit dem thermoelektrischen Modul gekoppelten Kondensatorbank ist.

8. System nach einem vorherigen Anspruch, das ferner wenigstens eine Anregungslichtquelle, wenigstens ein Filter zum Filtern des Anregungslichts von der Anregungslichtquelle, einen Homogenisator zum Homogenisieren des gefilterten Anregungslichts und eine Mehrzahl optischer Fasern umfasst, die mit ersten Enden neben dem Homogenisator angeordnet sind, um das homogenisierte, gefilterte Anregungslicht zu empfangen, und mit jeweiligen zweiten Enden neben jeweiligen Reaktionsgefäßen angeordnet sind, um das Anregungslicht in die jeweiligen Reaktionsgefäße zu leiten.

9. System nach Anspruch 8, wobei der Homogenisator ein hexagonales Prisma oder einen hexagonalen Zylinder aus lichtdurchlässigem Material zum mehrmaligen Reflektieren des Anregungslichts innerhalb des Homogenisators umfasst, um eine gleichmäßigere Beleuchtung jeder optischen Faser zu bewirken.

10. System nach Anspruch 8 oder 9, das ferner wenigstens eine zweite Anregungslichtquelle umfasst, die Anregungslicht eines anderen Wellenbandes als die erste Anregungslichtquelle liefert.

11. System nach Anspruch 10, wobei der Filter ein dichroitischer Spiegel ist, optional mit einem Filter neben jeder Lichtquelle zum Filtern des Anregungslichts von dieser Lichtquelle und optional ferner mit einem Kollimationselement zwischen der/den Anregungslichtquelle(n) und dem/den Filter(n) zum Kollimieren des auf den/die Filter einfallenden Anregungslichts.

12. System nach einem vorherigen Anspruch, das ferner Folgendes umfasst: wenigstens eine Anregungslichtquelle, wenigstens einen Sensor zum Detektieren des Anregungslichts von der Anregungslichtquelle, eine Lichtquellensteuerung, die mit dem Sensor und der Anregungslichtquelle gekoppelt ist, um die Anregungslichtquelle in Abhängigkeit von der durch den Sensor erfassten Lichtmenge zu steuern, um die Anregungslichtquelle abzuschalten, wenn eine vorbestimmte Lichtmenge erfasst wurde.

13. System nach Anspruch 12, wobei der Sensor so ausgelegt ist, dass er das Anregungslicht von einer optischen Faser empfängt, deren erstes Ende neben dem Ausgangsende des Homogenisators und deren zweites Ende neben dem Sensor angeordnet ist.

14. System nach Anspruch 12 oder 13, wobei die Lichtquellensteuerung die Anregungslichtquelle so steuert, dass sie mit einer Integrationszeit des Sensors synchronisiert ist.

15. System nach einem vorherigen Anspruch, wobei das oder jedes Reaktionsgefäß einen Aufnahmeabschnitt mit einem emittierenden Bereich umfasst, von dem Licht austreten kann, wobei das System wenigstens eine optische Faser für das oder jedes Reaktionsgefäß umfasst, die so angeordnet ist, dass sie Licht von dem emittierenden Bereich zu einer Lichtdetektionsvorrichtung zum Detektieren von einer oder mehreren Wellenlängen von Licht in dem aus dem emittierenden Bereich austretenden Licht lenkt.

16. System nach Anspruch 15, wobei die Lichtdetektionsvorrichtung ein oder mehrere wellenlängenspezifische Filter zum Auswählen bestimmter Wellenlängen oder Wellenbänder in dem von der/den optischen Faser(n) empfangenen Lichtspektrum umfasst.

17. System nach einem vorherigen Anspruch, wobei das wenigstens eine Reaktionsgefäß so konfiguriert ist, dass darin eine Polymerasekettenreaktion stattfinden kann.

## Revendications

1. Système chimique et/ou biochimique (1) ayant au moins une cuve à réaction (3) dans laquelle des réactions chimiques et/ou biochimiques peuvent se produire, une température des cuves à réaction (3) étant soumise à un cycle entre au moins une température maximale prédéterminée et une température minimale prédéterminée, le système (1) comportant :
un support thermique (4) servant à recevoir ladite au moins une cuve à réaction (3) dans une première surface de celui-ci, le support thermique (4) ayant une deuxième surface, opposée à la première surface ;
une première couche (31) d'adhésif flexible ayant une première surface et une deuxième surface opposée à la première surface, dans lequel la première surface de la première couche (31) d'adhésif flexible est en contact mécanique et thermique avec la deuxième surface du support thermique (4) ;
un module thermoélectrique (5) ayant un premier côté thermoconducteur (29) en contact mécanique et thermique avec la deuxième surface de la première couche (31) d'adhésif flexible, et un deuxième côté thermoconducteur (30) opposé au premier côté thermoconducteur du module thermoélectrique (5), le module thermoélectrique (5) comportant une paire de contacts électriques (33) auxquels une paire de fils électriquement conducteurs (34) est connectée à des fins de couplage à une source de puissance (35) ;
une deuxième couche (32) d'adhésif flexible ayant une première surface et une deuxième surface opposée à la première surface, dans lequel la première surface de la deuxième couche (32) d'adhésif flexible est en contact mécanique et thermique avec le deuxième côté thermoconducteur (30) du module thermoélectrique (5), dans lequel les première (31) et deuxième (32) couches de l'adhésif flexible sont appliquées en une épaisseur uniforme contrôlée de manière à avoir une conductivité thermique sensiblement uniforme au travers de celles-ci ;
un dissipateur thermique (6) en contact mécanique et thermique avec la deuxième surface de la deuxième couche (32) de l'adhésif flexible,
dans lequel la première couche (31) et la deuxième couche (32) de l'adhésif flexible comportent une couche respective d'adhésif à base de silicone ayant un matériau thermoconducteur dispersé dans celle-ci, les deux couches de l'adhésif flexible étant élastiques pour fournir le « jeu » permettant au support thermique, à la couche thermoélectrique et au dissipateur thermique de se plier au cours du cyclage thermique sans causer de détérioration d'ordre mécanique, l'adhésif flexible étant relativement thermiquement isolant si l'on compare aux premier (29) et deuxième (30) côtés thermoconducteurs du module thermoélectrique (5), l'adhésif flexible étant thermiquement anisotrope ce par quoi l'énergie thermique se répartit de préférence en travers des premier (29) et deuxième (30) côtés thermoconducteurs du module thermoélectrique (5) pour de ce fait réduire les points chauds et/ou froids sur les premier (29) et deuxième (30) côtés thermoconducteurs du module thermoélectrique (5) avant que l'énergie thermique ne soit transférée au travers des première (31) et deuxième (32) couches de l'adhésif flexible, et
dans lequel les première (31) et deuxième (32) couches de l'adhésif flexible forment le seul couplage thermique et mécanique entre le premier côté thermoconducteur (29) du module thermoélectrique (5) et la deuxième surface du support thermique (4) et entre le deuxième côté thermoconducteur (30) du module thermoélectrique (5) et le dissipateur thermique (6).

2. Système selon la revendication 1, comportant un élément thermiquement anisotrope entre le premier côté thermoconducteur du module thermoélectrique et la deuxième surface du support thermique et entre le deuxième côté thermoconducteur du module thermoélectrique et le dissipateur thermique.

3. Système selon l'une quelconque des revendications précédentes, dans lequel les fils électriquement conducteurs sont minces de manière à avoir une résistance électrique qui produit de la chaleur lors du fonctionnement du module thermoélectrique, la chaleur étant utilisée pour contrebalancer l'énergie thermique qui est conduite par les fils en provenance du module thermoélectrique.

4. Système selon l'une quelconque des revendications précédentes, dans lequel au moins une résistance est couplée en série entre l'un parmi les contacts électriques et le fil conducteur électrique en connexion à celle-ci pour produire de la chaleur lors du fonctionnement du module thermoélectrique, dans lequel la chaleur produite par la résistance est utilisée pour contrebalancer l'énergie thermique qui est conduite par les fils en provenance du module thermoélectrique.

5. Système selon l'une quelconque des revendications précédentes, comportant par ailleurs un dispositif de commande de puissance couplé entre les fils électriquement conducteurs et une source de puissance et au moins un condensateur couplé au dispositif de commande de puissance, dans lequel le dispositif de commande de puissance est en mesure de fournir du courant dans une direction pour amener le module thermoélectrique à transférer de la chaleur dans une direction, et de fournir du courant dans la direction opposée pour amener le module thermoélectrique à transférer de la chaleur dans la direction opposée, et dans lequel le dispositif de commande de puissance utilise le condensateur comme source de courant en le déchargeant, ou comme dissipateur pour le courant en chargeant le condensateur, et dans lequel le dispositif de commande de puissance peut utiliser la source de puissance comme alimentation de courant.

6. Système selon l'une quelconque des revendications précédentes, comportant par ailleurs au moins un condensateur couplé au module thermoélectrique et un dispositif de commande couplé entre le condensateur et l'alimentation en puissance électrique pour commander la puissance fournie en provenance de l'alimentation en puissance électrique, dans lequel, au cours d'une phase de repos du cycle thermique, quand le module thermoélectrique consomme une puissance relativement faible, le condensateur est chargé en provenance de la source de puissance, et au cours d'une phase de changement de température du cycle thermique, quand le module thermoélectrique consomme une puissance relativement élevée, le condensateur se décharge pour fournir au moins une partie des besoins en puissance au module thermoélectrique.

7. Système selon soit la revendication 5 soit la revendication 6, dans lequel ledit au moins un condensateur fait partie d'une batterie de condensateurs couplés au module thermoélectrique.

8. Système selon l'une quelconque des revendications précédentes, comportant par ailleurs au moins une source de lumière d'excitation, au moins un filtre servant à filtrer la lumière d'excitation en provenance de la source de lumière d'excitation, un homogénéisateur servant à homogénéiser la lumière d'excitation filtrée et une pluralité de fibres optiques agencées avec des premières extrémités adjacentes par rapport à l'homogénéisateur servant à recevoir la lumière d'excitation filtrée homogénéisée et des deuxièmes extrémités respectives adjacentes par rapport aux cuves à réaction respectives pour diriger la lumière d'excitation jusque dans les cuves à réaction respectives.

9. Système selon la revendication 8, dans lequel l'homogénéisateur comporte un prisme hexagonal ou cylindre de matériau transmettant la lumière à des fins de réflexion de la lumière d'excitation de multiple fois à l'intérieur de l'homogénéisateur de manière à fournir un éclairage plus uniforme de chaque fibre optique.

10. Système selon soit la revendication 8 soit la revendication 9, comportant par ailleurs au moins une deuxième source de lumière d'excitation fournissant de la lumière d'excitation d'une gamme d'ondes différente de celle de la première source de lumière d'excitation.

11. Système selon la revendication 10, dans lequel le filtre est un miroir dichroïque, éventuellement ayant un filtre adjacent par rapport à chaque source de lumière pour filtrer la lumière d'excitation en provenance de cette source de lumière, et éventuellement comportant par ailleurs un élément de collimation entre la(les) source(s) de lumière d'excitation et le(s) filtre(s) pour collimater la lumière d'excitation incidente sur le(s) filtre(s).

12. Système selon l'une quelconque des revendications précédentes, comportant par ailleurs au moins une source de lumière d'excitation, au moins un capteur servant à détecter la lumière d'excitation en provenance de la source de lumière d'excitation, un dispositif de commande de source de lumière couplé au capteur et à la source de lumière d'excitation pour commander la source de lumière d'excitation en fonction de la quantité de lumière détectée par le capteur pour éteindre la source de lumière d'excitation quand une quantité prédéterminée de lumière a été détectée.

13. Système selon la revendication 12, dans lequel le capteur est agencé pour recevoir la lumière d'excitation en provenance d'une fibre optique ayant une première extrémité agencée de manière adjacente par rapport à l'extrémité de sortie de l'homogénéisateur et une deuxième extrémité adjacente par rapport au capteur.

14. Système selon soit la revendication 12 soit la revendication 13, dans lequel le dispositif de commande de source de lumière commande la source de lumière d'excitation de telle sorte qu'elle est synchronisée par rapport à un temps d'intégration du capteur.

15. Système selon l'une quelconque des revendications précédentes, dans lequel la ou chaque cuve à réaction comporte une partie formant réceptacle ayant une zone d'émission en provenance de laquelle de la lumière peut émaner, le système comportant au moins une fibre optique pour la ou chaque cuve à réaction qui est agencée pour guider la lumière en provenance de la zone d'émission jusqu'à un dispositif de détection de lumière servant à détecter une ou plusieurs longueurs d'ondes de lumière dans la lumière émanant en provenance de la zone d'émission.

16. Système selon la revendication 15, dans lequel le dispositif de détection de lumière comporte un ou plusieurs filtres spécifiques à une longueur d'ondes pour sélectionner des longueurs d'ondes ou des gammes d'ondes particulières dans le spectre de lumière reçue en provenance de la (des) fibre optique(s).

17. Système selon l'une quelconque des revendications précédentes, dans lequel ladite au moins une cuve à réaction est configurée pour permettre à une Réaction en Chaîne par Polymérase de se produire dans celle-ci.
